# EUROPÄISCHE PATENTANMELDUNG

(11) **EP 2 156 871 A1**
(43) Veröffentlichungstag der Anmeldung: **24.02.2010**
(21) Anmeldenummer: 09009230.5
(22) Anmeldetag: 15.07.2009
(51) Int. Cl.: B01D 21/02, B01D 21/24, C02F 3/12

(54) **Klärbecken mit Auslasseinrichtung**

(30) Priorität: 22.08.2008 DE 202008011240 U
(71) Anmelder: Baumann, Markus, 32547 Bad Oeynhausen (DE)
(72) Erfinder: Baumann, Markus, 32547 Bad Oeynhausen (DE)
(74) Vertreter: Steinmeister, Helmut

(57) **Zusammenfassung**

Die Erfindung betrifft ein Klärbecken mit Auslaßeinrichtung für Klarwasser, welche Auslaßeinrichtung einen im Klärbecken angeordneten Nachklärbehälter umfaßt, der eine untere Einlaßöffnung aufweist und auf einer Höhe oberhalb der Einlaßöffnung mit einem Ablauf zur seitlichen Abführung von Klarwasser aus dem Nachklärbehälter nach außen versehen ist, dadurch gekennzeichnet, dass im Nachklärbehälter ein Abdeckelement (28) zur Abdeckung der Klarwasser-Oberfläche angeordnet ist.

## Beschreibung

Die vorliegende Erfindung betrifft ein Klärbecken mit einer Auslaßeinrichtung für Klarwasser, gemäß dem Oberbegriff des Anspruchs 1.

Klärbecken der vorliegenden Art stellen üblicherweise eine Klärstufe einer Kleinkläranlage dar, nämlich die eigentliche Klärkammer, in der das vorgereinigte Abwasser einer biologischen Reinigung unterzogen wird. Der Inhalt der Klärkammer wird zeitweise belüftet und durchmischt.

Während sich die darin enthaltenen Schlammpartikel vorwiegend auf dem Beckengrund sammeln, gelangt das biologisch gereinigte Wasser in einen Nachklärbehälter, der im oberen Klärbeckenbereich angeordnet sein kann und aus welchem die Klarwasserentnahme stattfindet. Über eine untere Einlaßöffnung strömt das Wasser in den Nachklärbehälter ein und füllt diesen bis zu einer Ablauföffnung, die durch geeignete Maßnahmen gedrosselt sein kann. Der Nachklärbehälter bildet somit ein weitgehend geschlossenes Volumen, das vor Turbulenzen im Klärbecken geschützt ist. In diesem Nachklärvolumen enthaltene Schlammpartikel können bis zur Einlaßöffnung absinken und wieder in das Klärbecken eintreten. Derartige Konstruktionen sind beispielsweise in der europäischen Patentanmeldung 04 000 591 sowie dem deutschen Gebrauchsmuster 20 2008 003 061 der Anmelderin beschrieben. Hier ist der Nachklärbehälter als Steigrohr ausgebildet, in welches ein Rohrstutzen seitlich hineinragt, der mit der Ablauföffnung versehen ist.

Ein Problem stellt jedoch Schwimmschlamm dar, der sich an der Wasseroberfläche sammelt und in die Ablauföffnung eintreten kann oder diese verstopft, so dass der ordnungsgemäße Betrieb der Kleinkläranlage gestört wird. Dieser Schwimmschlamm hat üblicherweise die Form eines mehr oder weniger festen Schaums und entsteht durch Bakterienstämme, an deren Oberfläche Gasblasen anhaften.

Aufgabe der vorliegenden Erfindung ist es daher, den Ablauf des Klärbeckens von Schwimmschlamm freizuhalten und somit zu gewährleisten, dass ausschließlich einwandfreies Klarwasser störungsfrei aus dem Klärbecken abgeführt wird, und zwar mit möglichst einfachen und kostengünstigen Mitteln.

Diese Aufgabe wird erfindungsgemäß durch die Merkmale des Anspruchs 1 erfüllt.

Das erfindungsgemäß im Nachklärbehälter enthaltene Abdeckelement unterbindet weitgehend einen Kontakt der Wasseroberfläche in der Nachklärung mit der Umgebungsluft, so dass ein sauerstoffarmes Millieu entsteht. Dies hat zur Folge, dass im Oberflächenbereich keine Gasbläschen durch Aktivität von Mikroorganismen entstehen können und damit die Bildung von Schwimmschlamm unterbunden wird. Sofern dessen Entstehung nicht vollständig verhindert wird, kann das Abdeckelement derart angeordnet sein, dass es den Schwimmschlamm weitgehend von der Ablauföffnung fernhält.

Vorzugweise ist der Nachklärbehälter als Steigrohr und der Ablauf als Rohrstutzen ausgebildet, wobei letzterer im wesentlichen horizontal durch eine Seitenwand des Steigrohrs geführt ist und zumindest eine Ablauföffnung umfaßt.

In einer Ausführungsform der Erfindung ist das Abdeckelement fest mit einer Seitenwand des Nachklärbehälters verbunden oder einstückig mit dieser ausgeformt.

In einer weiteren bevorzugten Ausführungsform ist das Abdeckelement als Schwimmkörper ausgebildet, der im Nachklärbehälter aufwärts und abwärts beweglich angeordnet ist.

Vorzugsweise umfaßt dieser Schwimmkörper einen hufeisenförmigen Teil, der flach auf der Wasseroberfläche aufliegt und mit seinen Schenkeln den Rohrstutzen beidseitig umgreift.

In einer weiteren bevorzugten Ausführungsform weist das Abdeckelement eine ausgehöhlte Unterseite auf.

Hierbei kann vorzugsweise die Unterseite des Abdeckelements konkav oder kegelförmig ausgehöhlt sein.

In einer solchen Aushöhlung kann sich an der Unterseite des Abdeckelements auftretender Schwimmschlamm sammeln.

Vorzugsweise erstreckt sich durch das Abdeckelement hindurch in vertikaler Richtung zumindest eine Öffnung.

Diese Öffnung kann dazu dienen, die Unterseite des Abdeckelements bzw. die darin angebrachte Aushöhlung zu entlüften und dort auftretende Gase nach oben abzuführen.

Vorzugsweise weist das Abdeckelement zumindest eine zentrale Öffnung auf, die am höchsten Punkt der Aushöhlung angeordnet ist.

Im folgenden wird ein bevorzugtes Ausführungsbeispiel der Erfindung anhand der Zeichnung näher erläutert.
- Fig. 1: ist ein seitlicher Teilschnitt durch einen Nachklärbehälter eines Klärbeckens, das eine Ausführungsform der vorliegenden Erfindung darstellt;
- Fig. 2: ist ein seitlicher Schnitt durch den Nachklärbehälter aus Figur 1, wobei die Schnittebene senkrecht zu derjenigen in Figur 1 steht;
- Fig. 3: ist eine aufgebrochene Teilansicht des Nachklärbehälters aus den Figuren 1 und 2 von unten; und
- Fig. 4: ist eine Ansicht des Nachklärbehälters aus den Figuren 1 bis 3 von oben.

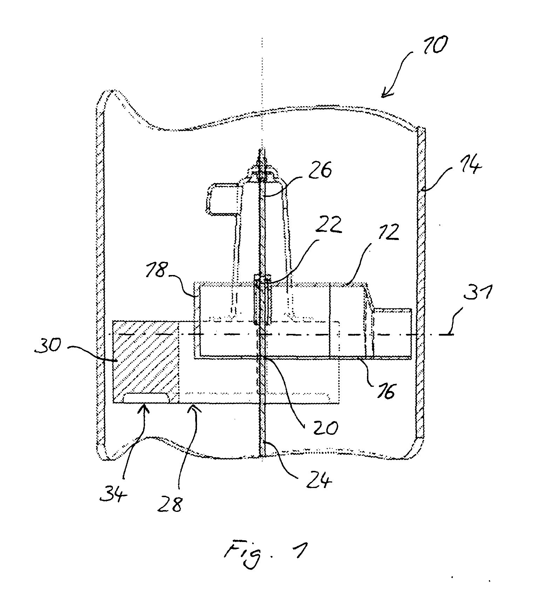

Figur 1 zeigt einen Abschnitt eines vertikalen Steigrohrs 10, das einen Nachklärbehälter in einem Klärbecken einer nicht näher dargestellten Kleinkläranlage darstellt. Das Klärbecken enthält bereits weitgehend gereinigtes Abwasser sowie Belebschlamm zur biologischen Klärung.

Der Belebschlamm kann sich weitgehend am Boden des Klärbeckens sammeln. Dem Klarwasser-Ablauf ist ein Nachklärbehälter in Form des hier dargestellten Steigrohrs 10 vorgeschaltet. An seinem nicht dargestellten unteren Ende weist das Steigrohr 10 eine Einlaßöffnung auf, durch welche Klarwasser in das Steigrohr 10 eindringen und in diesem aufsteigen kann. An seinem oberen Ende ist ein weitgehend horizontaler Rohrstutzen 12 durch die zylindrische Seitenwand 14 des Steigrohrs 10 geführt, so dass der Endabschnitt 16 des Rohrstutzens 12 innerhalb des Steigrohrs 10 angeordnet ist. Der Rohrstutzen 12 bildet den Klarwasserablauf.

Während die im Inneren des Steigrohrs 10 liegende Stirnwand 18 des Rohrstutzens 12 verschlossen ist, ist an der Unterseite des Rohrstutzens 12 eine Ablauföffnung 20 angeordnet, durch die das Klarwasser in den Rohrstutzen 12 aufsteigen und nach außen, d. h. in Figur 1 nach rechts abfließen kann. Der Ablauföffnung 20 gegenüberliegend ist auf der Oberseite des Rohrstutzens 12 eine Überlauföffnung 22 vorgesehen, die als Notablauf dienen kann.

Das im Klärbecken enthaltende Klarwasser kann somit durch die untere Einlaßöffnung in das Steigrohr 10 eindringen, in diesem aufsteigen und durch die Ablauföffnung 20 des Rohrstutzens 12 abfließen. Da die Aufstiegsgeschwindigkeit der Wassersäule im Steigrohr 10 gering ist, können darin enthaltene Schlammpartikel nach unten sinken und durch die Einlaßöffnung aus dem Steigrohr 10 austreten. So kann erreicht werden, dass lediglich partikelfreies Klarwasser durch die Auslaßöffnung 20 abgeführt wird. Ferner bietet das Volumen innerhalb des Steigrohrs 10 einen geschlossenen Raum, der vor Turbulenzen im Klärbecken weitgehend geschützt ist, so dass die Abscheidung der Schlammpartikel nicht gestört wird.

Ein senkrechter Stab 24 durchquert sowohl die Ablauföffnung 20 als auch die Überlauföffnung 22 und hält diese frei von Verstopfungen. Der Stab 24 ist an seinem aus dem Rohrstutzen 12 herausragenden freien Ende 26 an einem Schwimmkörper 28 befestigt, der den Wasserspiegel 30 im Steigrohr 10 frei folgen kann. Eine leichte Veränderung des Wasserspiegels 30 führt damit zu einem Aufsteigen oder Absinken des Schwimmkörpers 28 und somit zu einer vertikalen Bewegung des Stabs 24 entlang seiner Stabachse.

In ihren Grundzügen ist eine solche Auslaßeinrichtung für ein Klärbecken bereits aus dem deutschen Gebrauchsmuster 20 2008 003 061 bekannt.

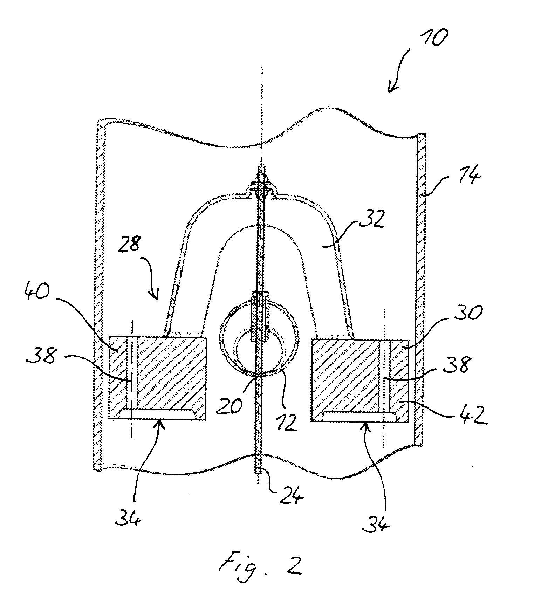

Im vorliegenden Fall ist der Schwimmkörper 28 jedoch so geformt, dass er die Oberfläche des im Steigrohr 10 enthaltenen Klarwassers praktisch vollständig abdeckt. Hierzu weist der Schwimmkörper 28 einen etwa hufeisenförmigen Teil 30 auf, der flach im Steigrohr-Querschnitt einliegt und den zwischen dem Rohrstutzen 12 und der Wand 14 des Steigrohrs 10 verbleibenden Querschnitt weitgehend ausfüllt. Auf diesem hufeisenförmigen Teil 30 erhebt sich ein U-förmiger Teil 32 (Figur 2), der den Rohrstutzen 12 überspannt und an dessen Scheitelpunkt der senkrechte Stab 24 mit seinem oberen Ende 26 befestigt ist. Der hufeisenförmige Teil 30 umgreift den Rorstutzen 12 von seiner Stirnseite 18 her zu beiden Seiten, während der U-förmige Teil 32 des Schwimmkörpers 28 die beiden Schenkel 40,42 des Teils 30 verbindet.

Der flache hufeisenförmige Teil 30 des Schwimmkörpers 28 liegt etwa auf Höhe der Ablauföffnung 20 auf der Wasseroberfläche 31 im Steigrohr 10. Steigt der Wasserspiegel, wird der gesamte Schwimmkörper 28 angehoben und zieht den vertikalen Stab 24 nach oben. Umgekehrt wird bei fallendem Wasserspiegel der Stab 24 senkrecht nach unten durch die Überlauföffnung 22 und die Ablauföffnung 20 geschoben.

Dank des hufeisenförmigen Teils 30 des Schwimmkörpers 28 findet kaum noch Luftkontakt zwischen der Klarwasser-Oberfläche um den Rohrstutzen 12 herum mit der Atmosphäre im oberen Teil des Steigrohrs 10 statt. Hierdurch wird eine Anreicherung des Klarwassers mit Sauerstoff im Bereich des Wasserspiegels verhindert, so dass die Aktivität von Mikroorganismen eingeschränkt wird. Dies unterbindet weitgehend die Bildung von Schwimmschlamm im Bereich des Wasserspiegels. Verbleibende Restmengen von Schwimmschlamm können sich unter dem hufeisenförmigen Teil 30 des Schwimmkörpers 28 in einer flachen Aushöhlung 34 sammeln. Diese Aushöhlung 34 erstreckt sich gemäß der Hufeisenform des Teils 30 praktisch über die gesamte untere Oberfläche des Schwimmkörpers 28 und ist von einem Begrenzungssteg 36 umgeben. Durch zwei senkrechte Bohrungen 38 in den seitlichen Schenkeln des hufeisenförmigen Teils 30 wird die Aushöhlung 34 mit der Oberseite des Schwimmkörpers 28 verbunden, so dass Gase aus der Aushöhlung 34 nach oben abgeführt werden können. Der Durchmesser dieser Bohrungen 38 ist so klein, dass er für einen Sauerstoffeintrag in den Oberflächenbereich des Klarwassers praktisch keine Rolle spielt.

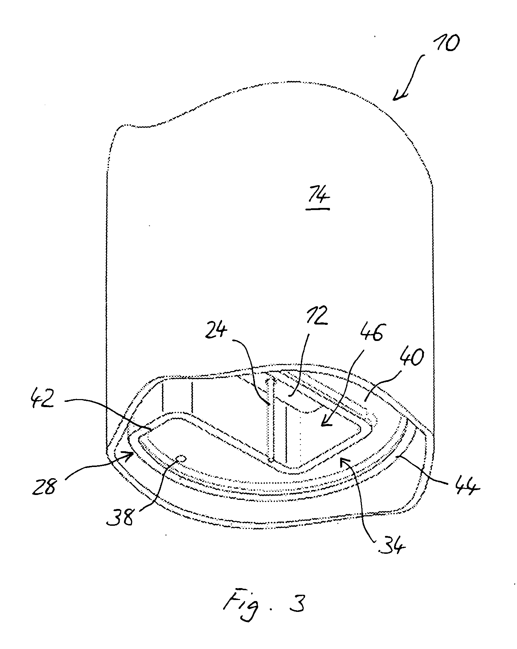

Innerhalb des in den Figuren dargestellten Abschnitts des Steigrohrs 10 kann sich der Schwimmkörper 28 aufwärts und abwärts bewegen, ohne dass wesentliche Teile der Klarwasser-Oberfläche im Steigrohr 10 freigegeben werden. Figur 3 zeigt diesen Abschnitt des Steigrohrs 10 mit dem darin einliegenden Schwimmkörper 28. Hier ist deutlich zu sehen, dass der hufeisenförmige Teil 30 mit seinem äußeren kreisbogenförmigen Umfang 44 dicht an der Wand 14 des Steigrohrs 10 anliegt. Die freie Beweglichkeit des Schwimmkörpers 28 wird hierdurch nicht beeinträchtigt. Ebenso ist die zentrale rechteckige Ausnehmung 46 im hufeisenförmigen Teil 30 erkennbar, die die beiden Schenkel 40, 42 voneinander trennt und in welcher der Rohstutzen 12 aufgenommen wird.

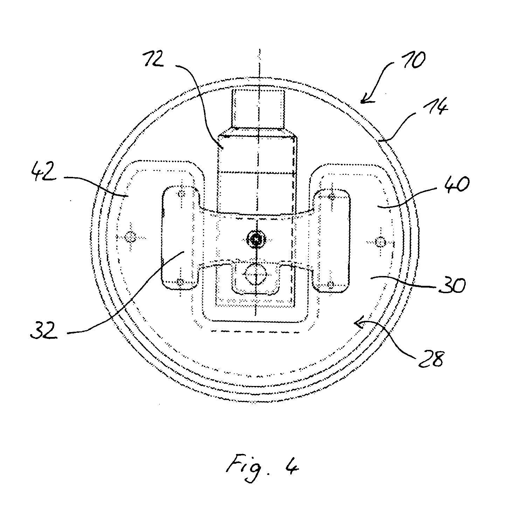

Die Draufsicht in Figur 4 zeigt ebenfalls deutlich, dass die Klarwasser-Oberfläche 30 größtenteils vom Schwimmkörper 28 verdeckt wird. Ferner sind die Lage des hufeisenförmigen Teils 30, des U-förmigen aufragenden Teils 32 des Schwimmkörpers 28 sowie des Rohrstutzens 12 zueinander im Steigrohr 10 erkennbar.

Bei der hier vorliegenden Ausführungsform dient ein Schwimmkörper 28 als Abdeckelement zur Abdeckung der Klarwasser-Oberfläche. Es ist jedoch auch möglich, das erfindungsgemäße Prinzip der Oberflächenabdeckung durch ein anders ausgebildetes Abdeckelement zu realisieren, das beispielsweise flach in dem oberen Querschnittsbereich des Steigrohrs 10 eingelassen und darin befestigt ist. Ein solches Abdeckelement kann fest mit einer Seitenwand des Nachklärbehälters verbunden sein, insbesondere auch einstückig mit diesem ausgeformt sein. Die Ausformung einer ausgehöhlten Unterseite am Abdeckelement, die Anbringung von Bohrungen, usw., kann in einem fest installierten Abdeckelement gleichermaßen stattfinden wie in der oben beschriebenen Weise in einem Schwimmkörper.

Zur Förderung der Bildung einer sauerstoffarmen Atmosphäre oberhalb der Klarwasseroberfläche 30 im Steigrohr 10 kann letzteres an seiner Oberseite durch einen Deckel verschlossen sein. Dieser verhindert einen Luftaustausch zwischen dem Innenraum des Steigrohrs 10 mit der Umgebung. Ist der Sauerstoff im Nachklärvolumen durch Aktivität von Mikroorganismen aufgebraucht, ist diesem die Grundlage für einen Stoffwechsel entzogen. So stellt ein luftdichter Abschluß eine weitere Maßnahme zur Unterbindung der Bildung von Schwimmschlamm dar.

## Patentansprüche

1. Klärbecken mit Auslaßeinrichtung für Klarwasser, welche Auslaßeinrichtung einen im Klärbecken angeordneten Nachklärbehälter umfaßt, der eine untere Einlaßöffnung aufweist und auf einer Höhe oberhalb der Einlaßöffnung mit einem Ablauf zur seitlichen Abführung von Klarwasser aus dem Nachklärbehälter nach außen versehen ist, **dadurch gekennzeichnet, dass** im Nachklärbehälter ein Abdeckelement (28) zur Abdeckung der Klarwasser-Oberfläche angeordnet ist.

2. Klärbecken gemäß Anspruch 1, **dadurch gekennzeichnet, dass** der Nachklärbehälter als Steigrohr (10) und der Ablauf als Rohrstutzen (12) ausgebildet ist, der im wesentlichen horizontal durch eine Seitenwand (16) des Steigrohrs (10) geführt ist und zumindest eine Ablauföffnung (20) umfaßt.

3. Klärbecken gemäß Anspruch 1 oder 2, **dadurch gekennzeichnet, dass** das Abdeckelement fest mit der Innenwand des Nachklärbehälters verbunden oder einstückig mit dieser ausgeformt ist.

4. Klärbecken gemäß Anspruch 1 oder 2, **dadurch gekennzeichnet, dass** das Abdeckelement als Schwimmkörper (28) ausgebildet ist, der im Nachklärbehälter aufwärts und abwärts beweglich angeordnet ist.

5. Klärbecken gemäß Anspruch 4 in Verbindung mit Anspruch 2, **dadurch gekennzeichnet, dass** der Schwimmkörper (28) einen hufeisenförmigen Teil (30) umfaßt, der flach auf der Wasseroberfläche aufliegt und mit seinen Schenkeln (40,42) den Rohrstutzen (12) beidseitig umgreift.

6. Klärbecken gemäß einem der vorhergehenden Ansprüche, **dadurch gekennzeichnet, dass** der Abdeckelement (28) eine ausgehöhlte Unterseite aufweist,

7. Klärbecken gemäß Anspruch 6, **dadurch gekennzeichnet, dass** die Unterseite des Abdeckelement (28) konkav oder kegelförmig ausgehöhlt ist.

8. Klärbecken gemäß einem der vorhergehenden Ansprüche, **dadurch gekennzeichnet, dass** sich durch den Abdeckelement (28) hindurch in vertikaler Richtung zumindest eine Öffnung (38) erstreckt.

9. Klärbecken gemäß Anspruch 8 in Verbindung mit Anspruch 6 oder 7, **dadurch gekennzeichnet, dass** der Abdeckelement (28) zumindest eine zentrale Öffnung aufweist, die am höchsten Punkt der Aushöhlung (34) angeordnet ist.
